# EUROPEAN PATENT SPECIFICATION

(11) **EP 3 204 740 B1**
(45) Date of publication and mention of the grant of the patent: **02.06.2021**
(21) Application number: 15848717.3
(22) Date of filing: 21.09.2015
(51) Int. Cl.: H01J 49/00, G06K 9/00

(54) **IMPROVING INFORMATION DEPENDENT ANALYSIS (IDA) SPECTRAL OUTPUT FOR DATABASE SEARCHES**
VERBESSERUNG DER AUSGANGSSPEKTREN DER INFORMATIONSABHÄNGIGEN DATENANALYSE (IDA) FÜR DATENBANKSUCHEN
AMÉLIORATION DU RÉSULTAT SPECTRAL EN ACQUISITION DÉPENDANTE DES DONNÉES (IDA) POUR DES RECHERCHES DANS DES BASES DE DONNÉES

(30) Priority: 08.10.2014 US 201462061492 P; 29.05.2015 US 201562168642 P
(43) Date of publication of application: 16.08.2017
(73) Proprietor: DH Technologies Development PTE. Ltd., Singapore 739256 (SG)
(72) Inventor: LE BLANC, Yves, Newmarket, Ontario L3X 1S3 (CA); COX, David M., Toronto, Ontario M2N 2C6 (CA)
(74) Representative: J A Kemp LLP
(86) International application number: PCT/IB2015/057262
(87) International publication number: WO 2016/055888

(56) References cited:
- WO-A1-2013/061144
- WO-A1-2013/061144
- US-A1- 2004 181 351
- US-A1- 2006 284 069
- US-A1- 2011 121 172
- US-A1- 2012 001 066
- US-A1- 2012 001 066
- US-A1- 2012 158 318
- US-B2- 7 838 824
- BILLER J E ET AL: "Reconstructed mass spectra, a novel approach for the utilization of gas chromatograph-mass spectrometer data", ANALYTICAL LETTERS, TAYLOR & FRANCIS INC, US, vol. 7, no. 7, 1 January 1974 (1974-01-01) , pages 515-528, XP000197961, ISSN: 0003-2719
- LUKAS REITER ET AL: "mProphet: automated data processing and statistical validation for large-scale SRM experiments", NATURE METHODS, vol. 8, no. 5, 1 May 2011 (2011-05-01), pages 430-435, XP055048425, ISSN: 1548-7091, DOI: 10.1038/nmeth.1584
- LUKAS REITER ET AL: "Supplementary information mProphet: automated data processing and statistical validation for large-scale SRM experiments", NATURE METHODS, vol. 8, no. 5, 20 March 2011 (2011-03-20), pages 430-435, XP055475326, ISSN: 1548-7091, DOI: 10.1038/nmeth.1584

## Description

Information dependent analysis (IDA) is a flexible tandem mass spectrometry method in which a user can specify criteria for producing product ion spectra during a chromatographic run. For example, in an IDA method a precursor or mass spectrometry (MS) survey scan is performed to generate a precursor ion peak list. The user can select criteria to filter the peak list for a subset of the precursor ions on the peak list. The subset of precursor ions are then fragmented and product ion spectra are obtained repeatedly during the chromatographic run.

IDA is a useful technique for identifying proteins or peptides from peptide fragments. Typically, IDA is performed on a protein or peptide mixture, producing a plurality of product ion spectra for the peptide fragments that are produced. Each spectrum of the plurality of product ion spectra are then compared to a protein or peptide database in order to identify the proteins or peptides in the mixture. WO 2013/061144 A1 discloses a tandem mass spectrometer operated with an IDA method.

Unfortunately, however, the protein or peptide identification can be adversely affected by mixed or convolved product ion spectra. In other words, some of the product ion spectra from the IDA method can include product ions from more than one precursor ion. As a result, when a mixed or convolved product ion spectrum is compared to a protein or peptide database, a match may not be found.

Several attempts have been made to address this problem of mixed or convolved product ion spectra with the goal of improving protein identification.
In one attempt, evidence of multiple precursor ions in the survey scan was used. For example, based on survey scan evidence of multiple precursor ions, the IDA method included fragmentation of any precursor ions within 2-3 amu of the original precursor ion selected and collection of the product ion spectra from the different precursor ions. In another attempt, a differential mobility separation (DMS) device was used to separate precursor ions in the gas phase prior to entering the vacuum of the mass spectrometer.

Unfortunately, however, none of these attempts to address the spectral convolution problem has proven valuable enough to be included in most IDA methods. As a result, most protein or peptide identification methods continue to compare product ion spectra "as is" from IDA method.

US 2012/0001066 A1 discloses an LC/MS system that does not use IDA principles. Specifically, this document fails to disclose use of product ion spectra collected from an IDA experiment; selecting and fragmenting the precursor ion at the two or more times across a chromatographic peak profile in an IDA method using a tandem mass spectrometer; and combining peaks in the two or more product ion spectra of product ions from each group of the at least two different groups, producing a combined product ion spectrum for each group of the at least two different groups that includes only peaks of product ions from the each group.

The present invention is defined in the claims.

A system is disclosed for separating product ions from convolved precursor ions in product ion spectra collected from an information dependent analysis (IDA) mass spectrometry experiment. The system includes a processor.

The processor receives two or more product ion spectra collected at two or more times across a peak profile of a compound separating over time. The two or more product ion spectra are produced by separating the compound over time from a sample using a separation device and selecting and fragmenting a precursor ion at the two or more times
across the peak of the separating compound using a tandem mass spectrometer, wherein the tandem mass spectrometer is configured to perform a full scan ion survey scan before selecting and fragmenting said precursor ion at the two or more times across the chromatographic peak. The processor compares intensities of product ions present in each spectrum of the two or more product ion spectra across the two or more product ion spectra. The processor identifies at least two different patterns that describe the change in product ion intensity across the two or more product ion spectra. The processor groups the product ions present in each spectrum of the two or more product ion spectra into at least two different groups according to the at least two different patterns. The processor combines peaks in the two or more product ion spectra of product ions from each group of the at least two different groups, producing a combined product ion spectrum for each group of the at least two different groups that includes only peaks of product ions from the each group.

A method is disclosed for separating product ions from convolved precursor ions in product ion spectra collected from an IDA mass spectrometry experiment. Two or more product ion spectra collected at two or more times across a peak profile of a compound separating over time are received using a processor. The two or more product ion spectra are produced by separating the compound over time from a sample using a separation device and selecting and fragmenting a precursor ion at the two or more times across the peak of the separating compound using a tandem mass spectrometer, wherein the tandem mass spectrometer is configured to perform a full scan ion survey scan before selecting and fragmenting said precursor ion at the two or more times across the chromatographic peak. Intensities of product ions present in each spectrum of the two or more product ion spectra are compared across the two or more product ion spectra using the processor. At least two different patterns that describe the change in product ion intensity across the two or more product ion spectra are identified using the processor. The product ions present in each spectrum of the two or more product ion spectra are grouped into at least two different groups according to the at least two different patterns using the processor. Peaks in the two or more product ion spectra of product ions from each group of the at least two different groups are combined using the processor, producing a combined product ion spectrum for each group of the at least two different groups that includes only peaks of product ions from the each group.

A computer program product is disclosed that includes a non-transitory and tangible computer-readable storage medium whose contents include a program with instructions being executed on a processor so as to perform a method for separating product ions from convolved precursor ions in product ion spectra collected from an IDA mass spectrometry experiment. The method includes providing a system, wherein the system comprises one or more distinct software modules, and wherein the distinct software modules comprise an input module and an analysis module.

The input module receives two or more product ion spectra collected at two or more times across a peak profile of a compound separating over time. The two or more product ion spectra are produced by separating the compound over time from a sample using a separation device and selecting and fragmenting a precursor ion at the two or more times across the peak of the separating compound using a tandem mass spectrometer, wherein the tandem mass spectrometer is configured to perform a full scan ion survey scan before selecting and fragmenting said precursor ion at the two or more times across the chromatographic peak. The analysis module compares intensities of product ions present in each spectrum of the two or more product ion spectra across the two or more product ion spectra. The analysis module identifies at least two different patterns that describe the change in product ion intensity across the two or more product ion spectra. The analysis module groups the product ions present in each spectrum of the two or more product ion spectra into at least two different groups according to the at least two different patterns. The analysis module combines peaks in the two or more product ion spectra of product ions from each group of the at least two different groups, producing a combined product ion spectrum for each group of the at least two different groups that includes only peaks of product ions from the each group.

These and other features of the applicant's teachings are set forth herein.

The skilled artisan will understand that the drawings, described below, are for illustration purposes only. The drawings are not intended to limit the scope of the present teachings in any way.
Figure 1 is a block diagram that illustrates a computer system, upon which embodiments of the present teachings may be implemented.
Figure 2 is an exemplary plot of the extracted ion current (XIC) associated with the precursor mass of two co-eluting isobaric peptides produced from an IDA method, in accordance with various embodiments.
Figure 3 is a series of product ion spectra collected for the points shown in Figure 2, in accordance with various embodiments.
Figure 4 is a first pattern of a first group of product ions from the product ion spectra of Figure 3, in various embodiments.
Figure 5 is a second pattern of a second group of product ions from the product ion spectra of Figure 3, in various embodiments.
Figure 6 is an exemplary plot of the intensity ratios of several product ions observed across the three points shown in Figure 2, in accordance with various embodiments.
Figure 7 is an exemplary plot of the normalized intensity ratios of several product ions observed across the three points shown in Figure 2, in accordance with various embodiments.
Figure 8 is an exemplary series of plots of product ion spectra that include the product ions of Figures 6 and 7, in accordance with various embodiments.
Figure 9 is an exemplary series of plots of combined product ion spectra based on the series of plots shown Figure 8, in accordance with various embodiments.
Figure 10 is a flowchart showing a method for separating product ions from convolved precursor ions in product ion spectra collected from an IDA mass spectrometry experiment, in accordance with various embodiments.
Figure 11 is a schematic diagram of a system that includes one or more distinct software modules that performs a method for separating product ions from convolved precursor ions in product ion spectra collected from an IDA mass spectrometry experiment, in accordance with various embodiments.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### COMPUTER-IMPLEMENTED SYSTEM

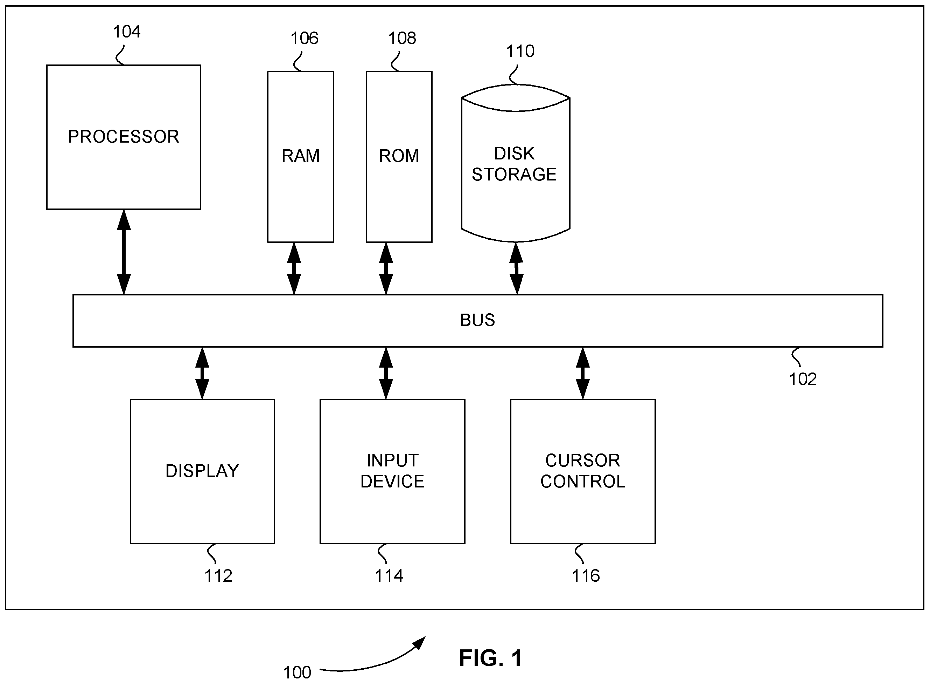

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112. This input device typically has two degrees of freedom in two axes, a first axis *(i.e*., x) and a second axis (*i.e*., y), that allows the device to specify positions in a plane.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein. Alternatively hard-wired circuitry may be used in place of or in combination with software instructions to implement the present teachings. Thus implementations of the present teachings are not limited to any specific combination of hardware circuitry and software.

In various embodiments, computer system 100 can be connected to one or more other computer systems, like computer system 100, across a network to form a networked system. The network can include a private network or a public network such as the Internet. In the networked system, one or more computer systems can store and serve the data to other computer systems. The one or more computer systems that store and serve the data can be referred to as servers or the cloud, in a cloud computing scenario. The one or more computer systems can include one or more web servers, for example. The other computer systems that send and receive data to and from the servers or the cloud can be referred to as client or cloud devices, for example.

The term "computer-readable medium" as used herein refers to any media that participates in providing instructions to processor 104 for execution. Such a medium may take many forms, including but not limited to, non-volatile media, volatile media, and transmission media. Non-volatile media includes, for example, optical or magnetic disks, such as storage device 110. Volatile media includes dynamic memory, such as memory 106. Transmission media includes coaxial cables, copper wire, and fiber optics, including the wires that comprise bus 102.

Common forms of computer-readable media or computer program products include, for example, a floppy disk, a flexible disk, hard disk, magnetic tape, or any other magnetic medium, a CD-ROM, digital video disc (DVD), a Bluray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

### SYSTEMS AND METHODS FOR IMPROVING IDA SPECTRA

As described above, IDA is a useful technique for identifying proteins or peptides from peptide fragments. However, the protein or peptide identification can be adversely affected by mixed or convolved product ion spectra. Several attempts have been made to address this problem. Unfortunately, however, none of these attempts to address the spectral convolution problem has proven valuable enough to be included in most IDA methods.

In various embodiments, a post-acquisition method is used to address the spectral convolution problem in IDA. In this method, product ion spectra are collected from two or more fragmentations that are performed across a chromatographic peak profile of a precursor ion selected from the peak list of a full scan ion survey scan. The product ion spectra for these two or more fragmentation times are then compared. The comparison involves analyzing the behavior of each product ion peak intensity at each of the two or more fragmentation times. Product ions are then grouped together with product ions that have peak intensities that vary with the same pattern over the two or more fragmentation times. A new spectrum is then generated for each group and includes only the peaks of the product ions in that group. The new spectra for the groups are then used to search a protein or peptide database.

A major benefit of time-of-flight (TOF) based tandem mass spectrometry systems is the speed of acquisition. This feature was viewed as an important benefit of ABSciex's 5600 series system when it was launched, as many product ion or mass spectrometry/mass spectrometry (MSMS) spectra for different precursor ions could be acquired on a liquid chromatography (LC)-time scale. In protein identification, an instrument is typically set to collect as many as 50 product ion spectra per cycle. This, however, can lead to rapid attrition of potential candidates under dynamic exclusion conditions, which, in turn, would frequently result in under sampling (less than 50 candidates) in many cases.

Systems and methods of various embodiments take advantage of the speed of such instruments, and force repetition of product ion data collection on the same candidate at least two to three times during the LC elution profile. Post-acquisition, product ions that exhibit the same profile are grouped together and stored as new product spectra. A key aspect of various embodiments is that spectral information can be combined to improve signal-to-noise (S/N) in some cases, and to improve selectivity of the product ion spectra by removing convolved information.

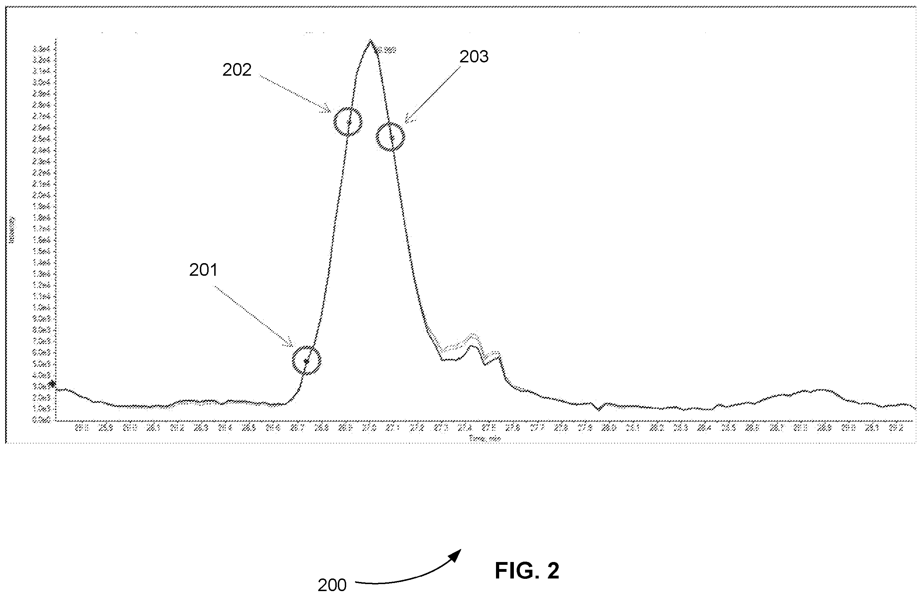

An exemplary IDA method was performed on a peptide mixture that included two co-eluting isobaric peptides. The co-eluting isobaric peptides had the same mass and charge state. However, one of the co-eluting isobaric peptides had an intensity about two to three times greater than the other. Figures 2-9 describe the post-acquisition processing performed on the data collected from this IDA method, in accordance with various embodiments.

Figure 2 is an exemplary plot 200 of the extracted ion current (XIC) associated with the precursor mass of two co-eluting isobaric peptides produced from an IDA method, in accordance with various embodiments. The precursor ion mass is 503.26, for example. Plot 200 also includes three points 201, 202, and 203 along the XIC or peak profile where product ion data is collected, in accordance with various embodiments. The three selected points 201, 202, and 203 are three different retention times of product ion spectra that were collected during acquisition.

In various embodiments, the points or times at which product ion spectra are collected are independent fragmentation events that are spaced out over the LC peak profile. These fragmentation events are not, for example, all acquired sequentially as it may provide better confidence in the grouping (especially when dealing with only 2 replicate tandem mass spectrometry events).

In various embodiments, an acquisition approach to ensure multiple tandem mass spectrometry, or mass spectrometry/mass spectrometry (MSMS), events for same precursor ion across the LC peak is to perform dynamic exclusion for a time period that is shorter than LC-peak. A good starting point is, for example, an exclusion window ≤ LC peak full width at half-height (FWHH).

In various alternative embodiments, another acquisition approach is automatic reacquisition. For example, reacquisition is automatically forced for no more than 30% of selected precursors after at least X cycles and again after 2^{∗}X cycle (X>1). A cycle is defined as complete cycle of at least one survey scan (typically a precursor ion scan) and corresponding dependent scans (tandem mass spectrometry events). Note that 30% value could be smaller and should be good for complex samples. Making it larger may have negative impact on the duty cycle of experiment and may lead to many precursor masses not being interrogated, especially in complex samples.

In various alternative embodiments, another acquisition approach is automated detection of multiple precursors within an isolation window. Automated detection of multiple precursors within an isolation window, for example, forces re-analysis in tandem mass spectrometry mode after X cycles (X>1).

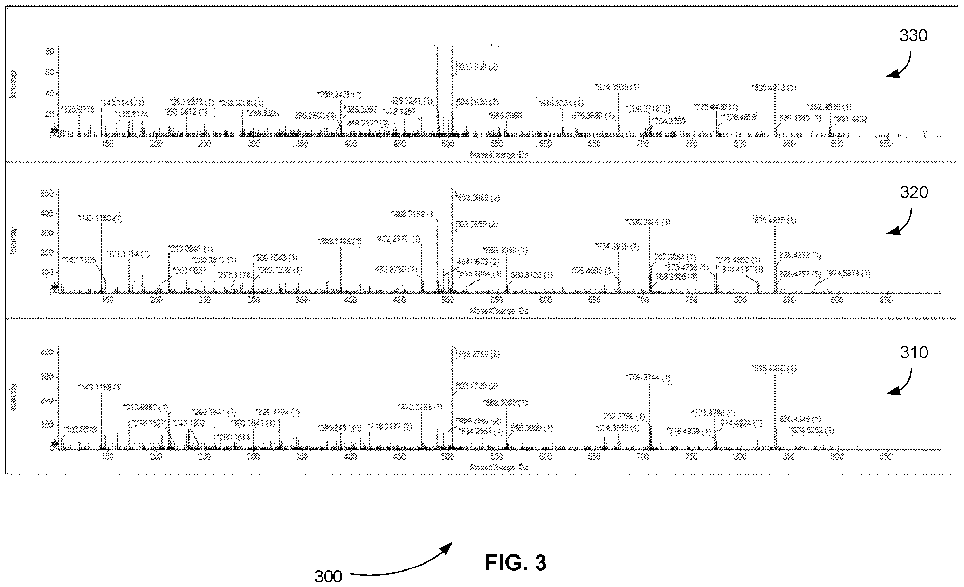

Figure 3 is a series 300 of product ion spectra collected for the points shown in Figure 2, in accordance with various embodiments. Series 300 includes product ion spectrum 310 collected for point 201 in Figure 2, product ion spectrum 320 collected for point 202 in Figure 2, product ion spectrum 330 collected for point 203 in Figure 2. Product ion spectra 310, 320, and 330 look very similar with many of the same masses. This is expected since both co-eluting isobaric peptides exactly the same mass and charge sate.

However, closer examination of the product ions in product ion spectra 310, 320, and 330 reveals that not all product ions vary across points or times 201, 202, and 203 of Figure 2 in the same way. Focusing on ions that are common to product ion spectra 310, 320, and 330, product ions are grouped together based on their observed pattern over the three points of the elution time. Intensities can be normalized to the intensity at time 201 of Figure 2, for example. Intensity patterns for groups are found.

The observed pattern can be determined in a number of ways. In various embodiments, the pattern is determined based on features extracted from the full scan ion survey scan in cases where detection is performed at resolution higher than that of precursor isolation prior to fragmentation and product ion mass analysis. For example, a survey scan is obtained at >25K resolution in TOF mode, and precursor isolation is performed at unit or wider resolution. In other words, if two precursors can be detected within the isolation window of corresponding precursor ion data, and they have different chromatographic profiles, these profiles can be used to determine which features to extract.

In various embodiments, the pattern can also be determined directly from product ion features. For example, the immonium ion includes representative of K or R residues from tryptic peptides. The R immonium ion has a triangular pattern, while the K residue has a flat pattern. Any signature ion particular to a compound of interest can be used.

In various embodiments, the pattern can also be determined from product ion spectra with no specific ion information. For example, principal component analysis (PCA) can be performed on all ions, and principal component variable grouping (PCVG) can be used to determine the top n groups of patterns.

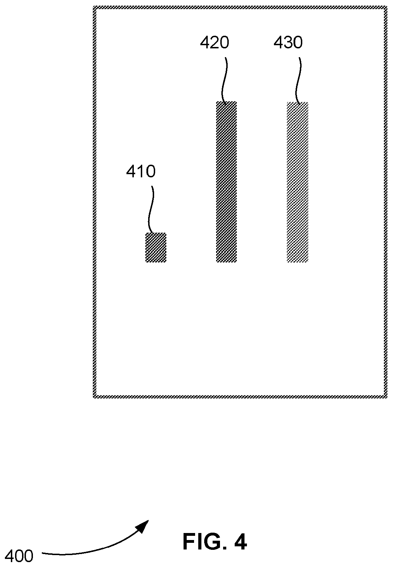

Figure 4 is a first pattern 400 of a first group of product ions from the product ion spectra of Figure 3, in various embodiments. Pattern 400 is, for example, a flat pattern over the three points 201, 202, and 203 of the elution time shown in Figure 2. For example, intensity 410 in Figure 4 corresponds to the intensity of the first group of product ions at point 201 of Figure 2. Intensity 420 in Figure 4 corresponds to the intensity of the first group of product ions at point 202 of Figure 2, and intensity 430 in Figure 4 corresponds to the intensity of the first group of product ions at point 203 of Figure 2. Intensity 410 of the first group in Figure 4 rises to intensity 420 and is then flat to intensity 430 over the three points of the elution time shown in Figure 2.

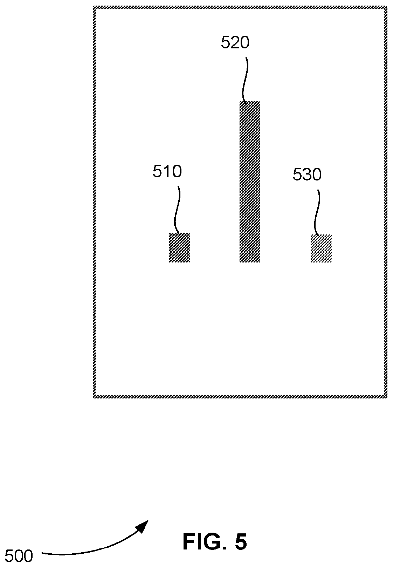

Figure 5 is a second pattern 500 of a second group of product ions from the product ion spectra of Figure 3, in various embodiments. Pattern 500 is, for example, a triangular pattern over the three points 201, 202, and 203 of the elution time shown in Figure 2. For example, intensity 510 in Figure 5 corresponds to the intensity of the first group of product ions at point 201 of Figure 2. Intensity 520 in Figure 5 corresponds to the intensity of the first group of product ions at point 202 of Figure 2, and intensity 530 in Figure 5 corresponds to the intensity of the first group of product ions at point 203 of Figure 2. Intensity 510 of the first group in Figure 5 rises to intensity 520 and then falls again to intensity 530 over the three points of the elution time shown in Figure 2.

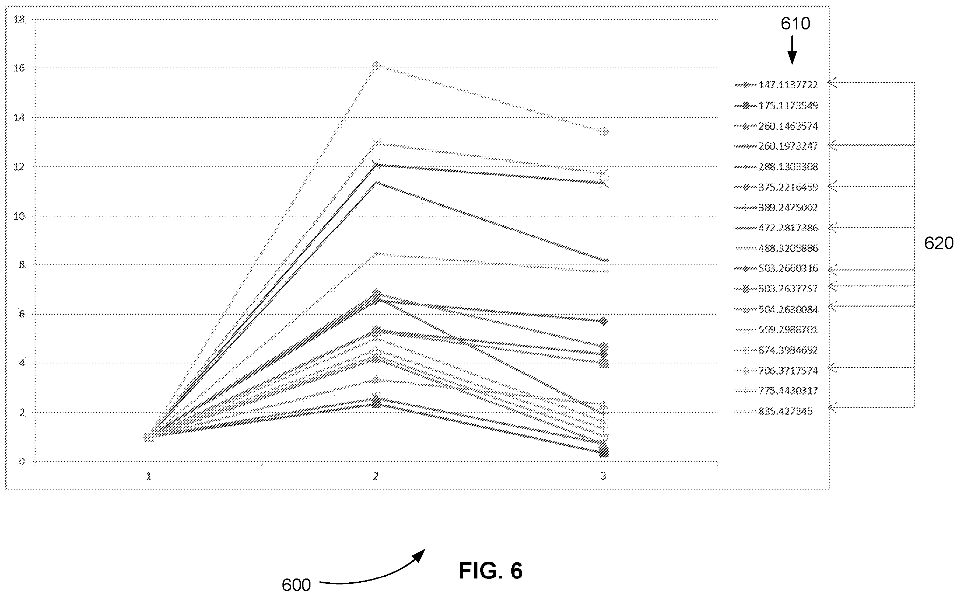

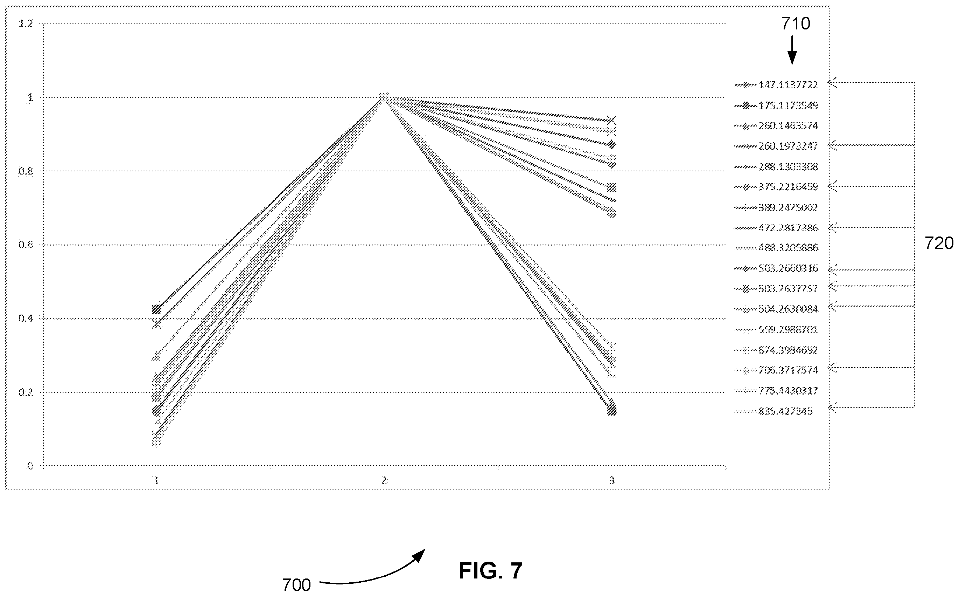

Figure 6 is an exemplary plot 600 of the intensity ratios of several product ions observed across the three points shown in Figure 2, in accordance with various embodiments. In plot 600, the intensity ratios for commonly observed product ion masses 610 are plotted across points 1, 2, and 3 corresponding to points or times 201, 202, and 203 of Figure 2. The intensity ratios are calculated by dividing the intensities at points 1, 2, and 3 by the intensity at point 1 (ratio at 1 is 11/11, ratio at 2 is 12/11, and ratio at 3 is 13/11). Plot 600 shows that product ion masses 620 all exhibit the flat pattern of Figure 4. The other product ion masses all exhibit the more triangular pattern of Figure 5. This is shown more clearly in Figure 7.

Figure 7 is an exemplary plot 700 of the normalized intensity ratios of several product ions observed across the three points shown in Figure 2, in accordance with various embodiments. In plot 700, the normalized intensity ratios for commonly observed product ion masses 710 are plotted across points 1, 2, and 3 corresponding to points or times 201, 202, and 203 of Figure 2. The normalized intensity ratios are calculate by first calculating the intensity ratios. The intensity ratios are calculated by dividing the intensities at points 1, 2, and 3 by the intensity at point 1 (ratio at 1 is 11/11, ratio at 2 is 12/11, and ratio at 3 is 13/11). These intensity ratios are then normalized by dividing by the intensity ratio at point 2. Plot 700 shows that product ion masses 720 all exhibit the flat pattern of Figure 4. The other product ion masses all exhibit the more triangular pattern of Figure 5.

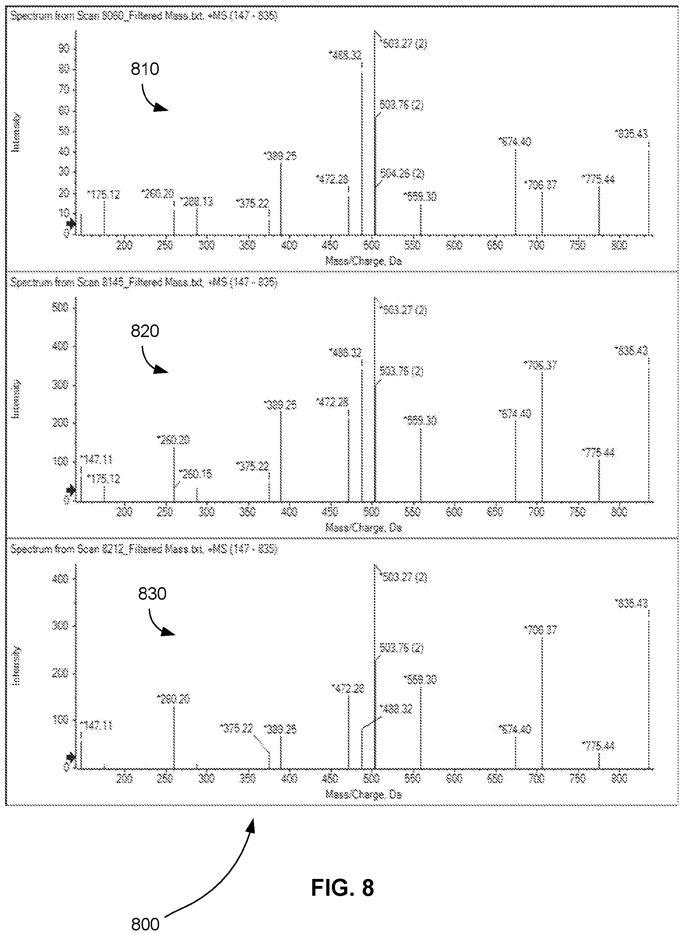

Figure 8 is an exemplary series 800 of plots of product ion spectra that include the product ions of Figures 6 and 7, in accordance with various embodiments. Plot 810 is the product ion spectrum for the product ions of Figures 6 and 7 collected at point or time 201 of Figure 2. Plot 820 of Figure 8 is the product ion spectrum for the product ions of Figures 6 and 7 collected at point or time 202 of Figure 2. Plot 830 of Figure 8 is the product ion spectrum for the product ions of Figures 6 and 7 collected at point or time 203 of Figure 2.

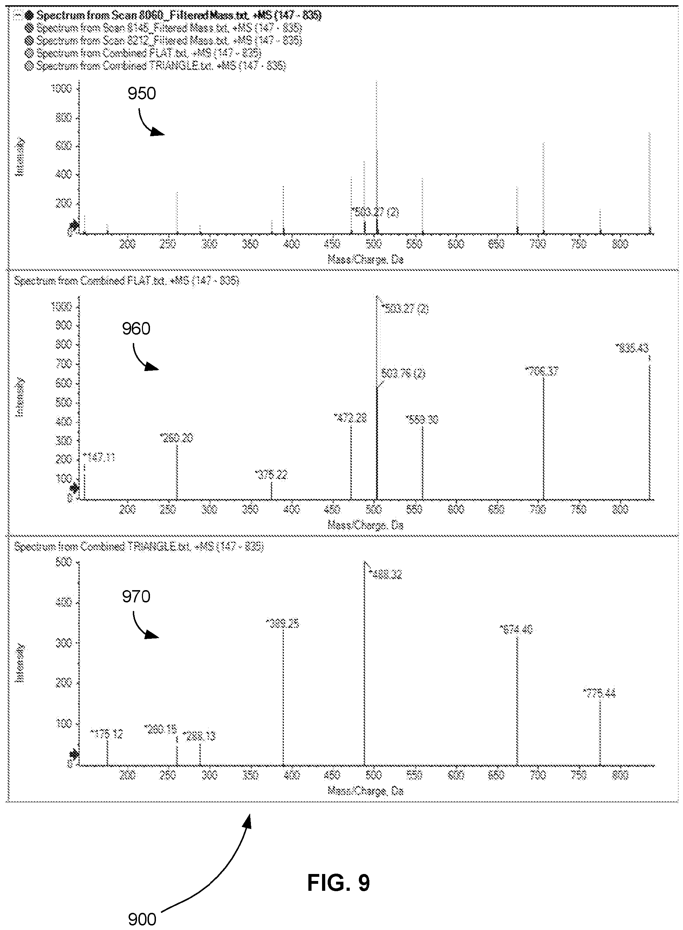

Figure 9 is an exemplary series 900 of plots of combined product ion spectra based on series 800 of plots shown Figure 8, in accordance with various embodiments. Plot 950 is the combined product ion spectrum of all of the product ion peaks in Figures 810, 820, and 830 of Figure 800. Plot 960 of Figure 9 is the combined product ion spectrum for the group of product ion peaks in Figures 810, 820, and 830 of Figure 800 that exhibit the flat pattern of Figure 4. The group of product ion peaks are summed, for example. However, any method of combining peaks can be used. Plot 970 of Figure 9 is the combined product ion spectrum for the group of product ion peaks in Figures 810, 820, and 830 of Figure 800 that exhibit the triangular pattern of Figure 5. This group of product ion peaks are also summed, for example. However, any method of combining peaks can be used.

Plots 960 and 970 of Figure 9 can be used for peptide or protein identification. Since plots 960 and 970 no longer include fragments from multiple precursor ions, these plots are more likely to provide better results when compared to protein and peptide databases.

### System For Separating Product Ions

Various embodiments include a system for separating product ions from convolved precursor ions in product ion spectra collected from an IDA mass spectrometry experiment. This system includes a processor configured to process tandem mass spectrometry data post-acquisition. The processor can be, but is not limited to, a computer, microprocessor, the computer system of Figure 1, or any device capable of processing data and sending and receiving data.

The processor receives two or more product ion spectra collected at two or more times across a peak profile of a compound separating over time. The two or more product ion spectra are produced by separating the compound over time from a sample using a separation device, and selecting and fragmenting a precursor ion at the two or more times across the peak of the separating compound using a tandem mass spectrometer, wherein the tandem mass spectrometer is configured to perform a full scan ion survey scan before selecting and fragmenting said precursor ion at the two or more times across the chromatographic peak. The separation device can perform a separation technique that includes, but is not limited to, liquid chromatography, gas chromatography, capillary electrophoresis, or ion mobility. The tandem mass spectrometer can include one or more physical mass analyzers that perform two or more mass analyses. A mass analyzer of a tandem mass spectrometer can include, but is not limited to, a TOF, a quadrupole, an ion trap, a linear ion trap, an orbitrap, or a Fourier transform mass analyzer.

The processor compares intensities of product ions present in each spectrum of the two or more product ion spectra across the two or more product ion spectra. The processor identifies at least two different patterns that describe the change in product ion intensity across the two or more product ion spectra. The processor groups the product ions present in each spectrum of the two or more product ion spectra into at least two different groups according to the at least two different patterns. Finally, the processor combines peaks in the two or more product ion spectra of product ions from each group of the at least two different groups. This produces a combined product ion spectrum for each group of the at least two different groups that includes only peaks of product ions from each group.

The processor can identify the at least two different patterns in a number of different ways. In a various embodiments, the tandem mass spectrometer further performs a full scan ion survey scan before selecting and fragmenting a precursor ion at the two or more times across the peak. The processor then further receives information from the full scan ion survey scan and identifies at least two different patterns based on features extracted from the information from the full scan ion survey scan. The features extracted from the information from the full scan ion survey scan include, for example, specific precursor ion information, such as two or more precursor ion in the precursor ion isolation window.

In various embodiments, the processor identifies at least two different patterns based on features of the two or more product ion spectra. The features of the two or more product ion spectra include, for example, specific product ion information, such as known residues of the a particular ion.

In various embodiments, the processor identifies at least two different patterns based on the two or more product ion spectra and without any specific product ion information. For example, the processor can perform PCA analysis on all product ions, and use PVCG to determine the groups.

In various embodiments, the processor combines the peaks of product ions from each group by summing the peaks of product ions. In various alternative embodiments, the peaks of product ions from each group can be combined by calculating a mean, median, or any other mathematical method of combining a group of data points.

In various embodiments, the processor further compares the combined product ion spectrum for each group to a compound database to identify the compound. The compound can include proteins or peptides, for example, and the compound database can be a protein or peptide database.

In various embodiments, the two or more product ion spectra collected at two or more times across a peak profile of a compound are spaced out over the peak profile of the compound. The tandem mass spectrometer can provide this spacing in a number of ways. In various embodiments, the tandem mass spectrometer further spaces the two or more times across the peak profile by including an exclusion window that has a width that is less than the width of the peak profile.

In various embodiments, the tandem mass spectrometer further spaces the two or more times across the peak profile by automatically forcing reacquisition of a percentage of selected precursor ions after a number of cycles and again after twice the number of cycles. A cycle, for example, includes a complete cycle of a full scan ion survey scan followed by a plurality of precursor ion selection and fragmentation scans.

In various embodiments, the tandem mass spectrometer further spaces the two or more times across the peak profile by automatically detecting two or more precursor ions within an isolation window and forcing a plurality of precursor ion selection and fragmentation scans for the isolation window after a number of cycles.

### Method For Separating Product Ions

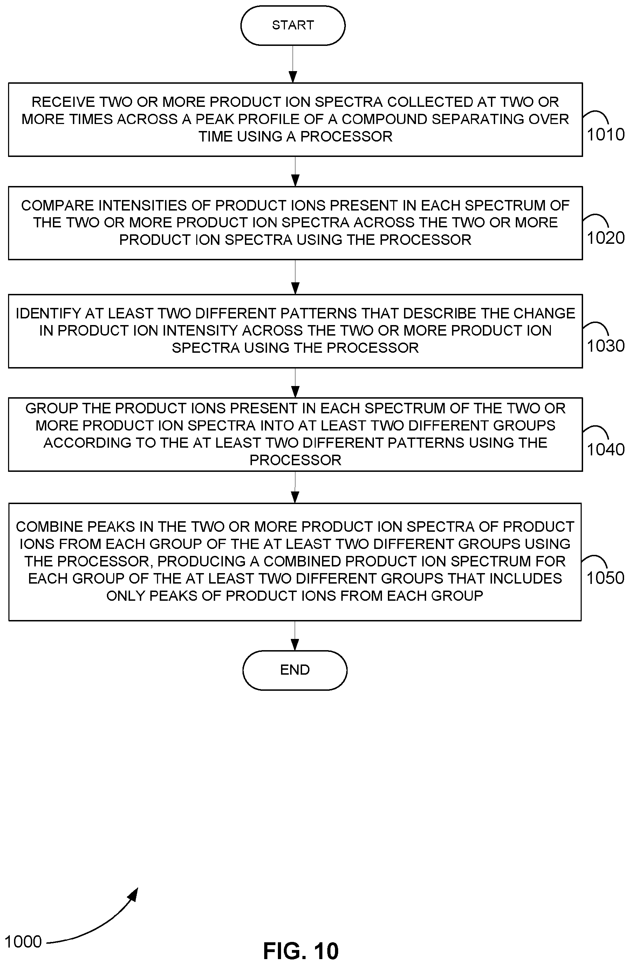

Figure 10 is a flowchart showing a method 1000 for separating product ions from convolved precursor ions in product ion spectra collected from an IDA mass spectrometry experiment, in accordance with various embodiments.

In step 1010 of method 1000, two or more product ion spectra collected at two or more times across a peak profile of a compound separating over time are received using a processor. The two or more product ion spectra are produced by separating the compound over time from a sample using a separation device and selecting and fragmenting a precursor ion at the two or more times across the peak of the separating compound using a tandem mass spectrometer, wherein the tandem mass spectrometer is configured to perform a full scan ion survey scan before selecting and fragmenting said precursor ion at the two or more times across the chromatographic peak.

In step 1020, intensities of product ions present in each spectrum of the two or more product ion spectra are compared across the two or more product ion spectra using the processor.

In step 1030, at least two different patterns are identified that describe the change in product ion intensity across the two or more product ion spectra using the processor.

In step 1040, the product ions present in each spectrum of the two or more product ion spectra are grouped into at least two different groups according to the at least two different patterns using the processor.

In step 1050, peaks in the two or more product ion spectra of product ions from each group of the at least two different groups are combined using the processor. This produces a combined product ion spectrum for each group of the at least two different groups that includes only peaks of product ions from each group.

### Computer Program Product For Separating Product Ions

In various embodiments, computer program products include a tangible computer-readable storage medium whose contents include a program with instructions being executed on a processor so as to perform a method for separating product ions from convolved precursor ions in product ion spectra collected from an IDA mass spectrometry experiment. This method is performed by a system that includes one or more distinct software modules.

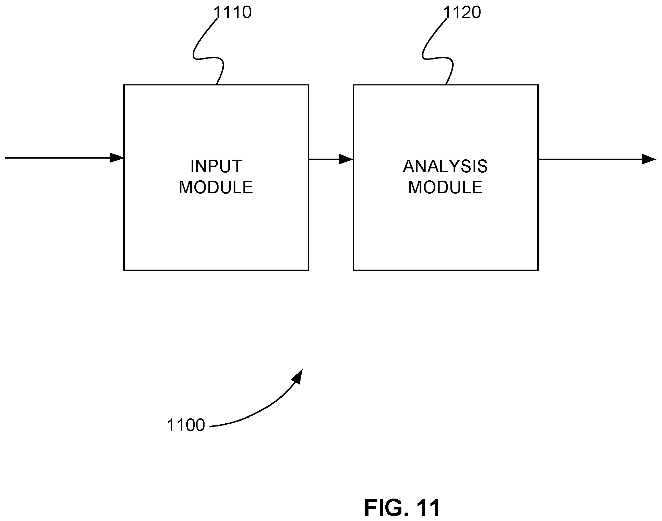

Figure 11 is a schematic diagram of a system 1100 that includes one or more distinct software modules that performs a method for separating product ions from convolved precursor ions in product ion spectra collected from an IDA mass spectrometry experiment, in accordance with various embodiments. System 1100 includes input module 1110 and analysis module 1120.

Input module 1110 receives two or more product ion spectra collected at two or more times across a peak profile of a compound separating over time. The two or more product ion spectra are produced by separating the compound over time from a sample using a separation device and selecting and fragmenting a precursor ion at the two or more times across the peak of the separating compound using a tandem mass spectrometer, wherein the tandem mass spectrometer is configured to perform a full scan ion survey scan before selecting and fragmenting said precursor ion at the two or more times across the chromatographic peak.

Analysis module 1120 compares intensities of product ions present in each spectrum of the two or more product ion spectra across the two or more product ion spectra. Analysis module 1120 identifies at least two different patterns that describe the change in product ion intensity across the two or more product ion spectra. Analysis module 1120 groups the product ions present in each spectrum of the two or more product ion spectra into at least two different groups according to the at least two different patterns using the analysis module. Finally, analysis module 1120 combines peaks in the two or more product ion spectra of product ions from each group of the at least two different groups. This produces a combined product ion spectrum for each group of the at least two different groups that includes only peaks of product ions from the each group.

While the present teachings are described in conjunction with various embodiments, it is not intended that the present teachings be limited to such embodiments. On the contrary, the present teachings encompass various alternatives, modifications, and equivalents, as will be appreciated by those of skill in the art. The matter for which protection is sought is defined by the appended claims.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the claims.

## Claims

1. A system (100) for separating product ions from convolved precursor ions in product ion spectra collected from an information dependent analysis (IDA) mass spectrometry experiment, the system comprising:
a processor (104) that is configured to:
receive two or more product ion spectra (300) collected at two or more times (201, 202, 203) across a chromatographic peak profile of a precursor ion of a compound separating over time, wherein the two or more product ion spectra are produced by separating the compound over time from a sample using a separation device and selecting and fragmenting the precursor ion at the two or more times across the chromatographic peak profile in an IDA method using a tandem mass spectrometer, wherein the tandem mass spectrometer is configured to perform a full scan ion survey scan before selecting and fragmenting said precursor ion at the two or more times across the chromatographic peak,
compare intensities of product ions present in each spectrum of the two or more product ion spectra across the two or more product ion spectra,
identify at least two different patterns (400, 500) that describe the change in product ion intensity across the two or more product ion spectra,
group the product ions present in each spectrum of the two or more product ion spectra into at least two different groups according to the at least two different patterns, and
combine peaks in the two or more product ion spectra of product ions from each group of the at least two different groups, producing a combined product ion spectrum (960, 970) for each group of the at least two different groups that includes only peaks of product ions from the each group.

2. The system of claim 1, further comprising said tandem mass spectrometer and wherein the processor is further configured to receive information from the full scan ion survey scan and identifies at least two different patterns based on features extracted from the information from the full scan ion survey scan.

3. The system of claim 2, wherein the features comprise specific precursor ion information.

4. The system of claim 1, wherein the processor is configured to identify at least two different patterns based on features of the two or more product ion spectra.

5. The system of claim 4, wherein the features comprise specific product ion information.

6. The system of claim 1, wherein the processor is configured to identify at least two different patterns based the two or more product ion spectra and without any specific product ion information.

7. The system of claim 1, wherein the processor is configured to combine the peaks of product ions from each group by summing the peaks of product ions.

8. The system of claim 1, wherein the processor is further configured to compare the combined product ion spectrum for each group to a compound database to identify the compound.

9. The system of claim 1, wherein the compound comprises proteins or peptides.

10. The system of claim 1, further comprising said tandem mass spectrometer that is configured to space the two or more times across the chromatographic peak profile.

11. The system of claim 10, wherein the tandem mass spectrometer is further configured to space the two or more times across the chromatographic peak profile by including an exclusion window that has a width that is less than the width of the chromatographic peak profile.

12. The system of claim 10, wherein the tandem mass spectrometer is further configured to space the two or more times across the chromatographic peak profile by automatically forcing reacquisition of a percentage of selected precursor ions after a number of cycles and again after twice the number of cycles, wherein a cycle comprises a complete cycle of a full scan ion survey scan followed by a plurality of precursor ion selection and fragmentation scans.

13. The system of claim 10, wherein the tandem mass spectrometer is further configured to space the two or more times across the chromatographic peak profile by automatically detecting two or more precursor ions within an isolation window and forcing a plurality of precursor ion selection and fragmentation scans for the isolation window after a number of cycles, wherein a cycle comprises a complete cycle of a full scan ion survey scan followed by a plurality of precursor ion selection and fragmentation scans.

14. A method (1000) for separating product ions from convolved precursor ions in product ion spectra collected from an information dependent analysis (IDA) mass spectrometry experiment, the method comprising:
receiving (1010) two or more product ion spectra collected at two or more times across a chromatographic peak profile of a precursor ion of a compound separating over time using a processor, wherein the two or more product ion spectra are produced by separating the compound over time from a sample using a separation device and selecting and fragmenting the precursor ion at the two or more times across the chromatographic peak profile in an IDA method using a tandem mass spectrometer, wherein the tandem mass spectrometer is configured to perform a full scan ion survey scan before selecting and fragmenting said precursor ion at the two or more times across the chromatographic peak;
comparing (1020) intensities of product ions present in each spectrum of the two or more product ion spectra across the two or more product ion spectra using the processor;
identifying (1030) at least two different patterns that describe the change in product ion intensity across the two or more product using the processor;
grouping (1040) the product ions present in each spectrum of the two or more product ion spectra into at least two different groups according to the at least two different patterns using the processor; and
combining (1050) peaks in the two or more product ion spectra of product ions from each group of the at least two different groups using the processor, producing a combined product ion spectrum for each group of the at least two different groups that includes only peaks of product ions from the each group.

15. A computer program product, comprising a non-transitory and tangible computer-readable storage medium whose contents include a program with instructions to be executed on a processor so as to perform a method for separating product ions from convolved precursor ions in product ion spectra collected from an information dependent analysis (IDA) mass spectrometry experiment, the method comprising:
providing a system (1100), wherein the system comprises one or more distinct software modules, and wherein the distinct software modules comprise an input module (1110) and an analysis module (1120);
receiving (1010) two or more product ion spectra collected at two or more times across a chromatographic peak profile of a precursor ion of a compound separating over time using the input module, wherein the two or more product ion spectra are produced by separating the compound over time from a sample using a separation device and selecting and fragmenting the precursor ion at the two or more times across the chromatographic peak profile in an IDA method using a tandem mass spectrometer,
wherein the tandem mass spectrometer is configured to perform a full scan ion survey scan before selecting and fragmenting said precursor ion at the two or more times across the chromatographic peak;
comparing (1020) intensities of product ions present in each spectrum of the two or more product ion spectra across the two or more product ion spectra using the analysis module;
identifying (1030) at least two different patterns that describe the change in product ion intensity across the two or more product ion spectra using the analysis module;
grouping (1040) the product ions present in each spectrum of the two or more product ion spectra into at least two different groups according to the at least two different patterns using the analysis module; and
combining (1050) peaks in the two or more product ion spectra of product ions from each group of the at least two different groups using the analysis module, producing a combined product ion spectrum for each group of the at least two different groups that includes only peaks of product ions from the each group.

## Patentansprüche

1. System (100) zum Trennen von Produktionen von gefalteten Vorläuferionen in Produktionenspektren, die aus einem Massenspektrometrieexperiment mit informationsabhängiger Analyse (Information Dependent Analysis, IDA) gesammelt wurden, wobei das System Folgendes umfasst:
einen Prozessor (104), der für Folgendes konfiguriert ist:
Empfangen von zwei oder mehr Produktionenspektren (300), die zweimal oder mehrmals (201, 202, 203) über ein chromatographisches Spitzenprofil eines Vorläuferions einer Verbindung gesammelt wurden, die sich über die Zeit trennt, wobei die zwei oder mehr Produktionenspektren durch zeitliches Trennen der Verbindung von einer Probe unter Verwendung einer Trennvorrichtung und Auswählen und Fragmentieren des Vorläuferions zweimal oder mehrmals über das chromatographische Spitzenprofil in einem IDA-Verfahren unter Verwendung eines Tandem-Massenspektrometers erzeugt werden, wobei das Tandem-Massenspektrometer dafür konfiguriert ist, einen Ionen-Erfassungs-Scan mit vollständigem Scan durchzuführen, bevor das Vorläuferion zwei- oder mehrmals über die chromatographische Spitze ausgewählt und fragmentiert wird,
Vergleichen der Intensität der Produktionen, die in jedem Spektrum der zwei oder mehr Produktionenspektren vorhanden sind, über die zwei oder mehr Produktionenspektren,
Identifizieren von mindestens zwei verschiedenen Mustern (400, 500), die die Änderung der Produktionenintensität über die zwei oder mehr Produktionenspektren beschreiben,
Gruppieren der Produktionen, die in jedem Spektrum der zwei oder mehr Produktionenspektren vorhanden sind, in mindestens zwei verschiedene Gruppen gemäß den mindestens zwei verschiedenen Mustern und
Kombinieren von Spitzen in den zwei oder mehr Produktionenspektren von Produktionen aus jeder Gruppe der mindestens zwei verschiedenen Gruppen, wodurch ein kombiniertes Produktionenspektrum (960, 970) für jede Gruppe der mindestens zwei verschiedenen Gruppen erzeugt wird, das nur Spitzen von Produktionen aus jeder Gruppe enthält.

2. System nach Anspruch 1, das ferner das Tandem-Massenspektrometer umfasst, und wobei der Prozessor ferner dafür konfiguriert ist, Informationen aus dem Ionen-Erfassungs-Scan mit vollständigem Scan zu empfangen und mindestens zwei verschiedene Muster basierend auf Merkmalen zu identifizieren, die aus den Informationen aus dem Ionen-Erfassungs-Scan mit vollständigem Scan extrahiert wurden.

3. System nach Anspruch 2, wobei die Merkmale spezifische Vorläuferioneninformationen umfassen.

4. System nach Anspruch 1, wobei der Prozessor dafür dafür konfiguriert ist, mindestens zwei verschiedene Muster basierend auf Merkmalen der zwei oder mehr Produktionenspektren zu identifizieren.

5. System nach Anspruch 4, wobei die Merkmale spezifische Produktioneninformationen umfassen.

6. System nach Anspruch 1, wobei der Prozessor dafür konfiguriert ist, mindestens zwei verschiedene Muster basierend auf den zwei oder mehr Produktionenspektren und ohne spezifische Produktioneninformationen zu identifizieren.

7. System nach Anspruch 1, wobei der Prozessor dafür konfiguriert ist, die Spitzen von Produktionen aus jeder Gruppe durch Summieren der Spitzen von Produktionen zu kombinieren.

8. System nach Anspruch 1, wobei der Prozessor ferner dafür konfiguriert ist, das kombinierte Produktionenspektrum für jede Gruppe mit einer Verbindungsdatenbank zu vergleichen, um die Verbindung zu identifizieren.

9. System nach Anspruch 1, wobei die Verbindung Proteine oder Peptide umfasst.

10. System nach Anspruch 1, das ferner das Tandem-Massenspektrometer umfasst, das dafür konfiguriert ist, die zwei oder mehr Male über das chromatographische Spitzenprofil zu beabstanden.

11. System nach Anspruch 10, wobei das Tandem-Massenspektrometer ferner dafür konfiguriert ist, die zwei oder mehr Male über das chromatographische Spitzenprofil zu beabstanden, indem ein Ausschlussfenster eingeschlossen wird, dessen Breite kleiner als die Breite des chromatographischen Spitzenprofils ist.

12. System nach Anspruch 10, wobei das Tandem-Massenspektrometer ferner dafür konfiguriert ist, die zwei oder mehr Male über das chromatographische Spitzenprofil durch automatisches Erzwingen der Wiedererfassung eines Prozentsatzes ausgewählter Vorläuferionen nach einer Anzahl von Zyklen und erneut nach der doppelten Anzahl von Zyklen zu beabstanden, wobei ein Zyklus einen vollständigen Zyklus eines Ionen-Erfassungs-Scans mit vollständigem Scan umfasst, gefolgt von mehreren VorläuferionenAuswahl- und Fragmentierungs-Scans.

13. System nach Anspruch 10, wobei das Tandem-Massenspektrometer ferner dafür konfiguriert ist, die zwei oder mehr Male über das chromatographische Spitzenprofil durch automatisches Erkennen von zwei oder mehr Vorläuferionen innerhalb eines Isolationsfensters und Erzwingen einer Vielzahl von Vorläuferionenauswahl- und Fragmentierungsscans für das Isolationsfenster nach einer Reihe von Zyklen zu beabstanden, wobei ein Zyklus einen vollständigen Zyklus eines Ionen-Erfassungs-Scans mit vollständigem Scan umfasst, gefolgt von mehreren Vorläuferionen-Auswahl- und Fragmentierungs-Scans.

14. Verfahren (1000) zum Trennen von Produktionen von gefalteten Vorläuferionen in Produktionenspektren, die aus einem Massenspektrometrieexperiment mit informationsabhängiger Analyse (IDA) gesammelt wurden, wobei das Verfahren Folgendes umfasst:
Empfangen (1010) von zwei oder mehr Produktionenspektren, die zweimal oder mehrmals über ein chromatographisches Spitzenprofil eines Vorläuferions einer Verbindung gesammelt wurden, die sich unter Verwendung eines Prozessors über die Zeit trennt, wobei die zwei oder mehr Produktionenspektren durch zeitliches Trennen der Verbindung von einer Probe unter Verwendung einer Trennvorrichtung und Auswählen und Fragmentieren des Vorläuferions zweimal oder mehrmals über das chromatographische Spitzenprofil in einem IDA-Verfahren unter Verwendung eines Tandem-Massenspektrometers erzeugt werden, wobei das Tandem-Massenspektrometer dafür konfiguriert ist, einen Ionen-Erfassungs-Scan mit vollständigem Scan durchzuführen, bevor das Vorläuferion zwei- oder mehrmals über die chromatographische Spitze ausgewählt und fragmentiert wird;
Vergleichen (1020) der Intensität der Produktionen, die in jedem Spektrum der zwei oder mehr Produktionenspektren vorhanden sind, über die zwei oder mehr Produktionenspektren unter Verwendung des Prozessors,
Identifizieren (1030) von mindestens zwei verschiedenen Mustern, die die Änderung der Produktionenintensität über die zwei oder mehr Produkte unter Verwendung des Prozessors beschreiben;
Gruppieren (1040) der Produktionen, die in jedem Spektrum der zwei oder mehr Produktionenspektren vorhanden sind, in mindestens zwei verschiedene Gruppen gemäß den mindestens zwei verschiedenen Mustern unter Verwendung des Prozessors; und
Kombinieren (1050) von Spitzen in den zwei oder mehr Produktionenspektren von Produktionen aus jeder Gruppe der mindestens zwei verschiedenen Gruppen unter Verwendung des Prozessors, wodurch ein kombiniertes Produktionenspektrum für jede Gruppe der mindestens zwei verschiedenen Gruppen erzeugt wird, das nur Spitzen von Produktionen aus jeder Gruppe enthält.

15. Computerprogrammprodukt, das ein nicht-flüchtiges und physikalisches computerlesbares Speichermedium umfasst, dessen Inhalt ein Programm mit Anweisungen umfasst, die auf einem Prozessor ausgeführt werden, um ein Verfahren zum Trennen von Produktionen von gefalteten Vorläuferionen in Produktionenspektren auszuführen, die aus einem Massenspektrometrieexperiment mit informationsabhängiger Analyse (IDA) gesammelt wurden,
wobei das Verfahren Folgendes umfasst:
Bereitstellen eines Systems (1100), wobei das System ein oder mehrere verschiedene Softwaremodule umfasst, und wobei die verschiedenen Softwaremodule ein Eingabemodul (1110) und ein Analysemodul (1120) umfassen;
Empfangen (1010) von zwei oder mehr Produktionenspektren, die zweimal oder mehrmals über ein chromatographisches Spitzenprofil eines Vorläuferions einer Verbindung gesammelt wurden, die sich unter Verwendung des Eingabemoduls über die Zeit trennt, wobei die zwei oder mehr Produktionenspektren durch zeitliches Trennen der Verbindung von einer Probe unter Verwendung einer Trennvorrichtung und Auswählen und Fragmentieren des Vorläuferions zweimal oder mehrmals über das chromatographische Spitzenprofil in einem IDA-Verfahren unter Verwendung eines Tandem-Massenspektrometers erzeugt werden, wobei das Tandem-Massenspektrometer dafür konfiguriert ist, einen Ionen-Erfassungs-Scan mit vollständigem Scan durchzuführen, bevor das Vorläuferion zwei- oder mehrmals über die chromatographische Spitze ausgewählt und fragmentiert wird;
Vergleichen (1020) der Intensität der Produktionen, die in jedem Spektrum der zwei oder mehr Produktionenspektren vorhanden sind, über die zwei oder mehr Produktionenspektren unter Verwendung des Analysemoduls,
Identifizieren (1030) von mindestens zwei verschiedenen Mustern, die die Änderung der Produktionenintensität über die zwei oder mehr Produktionenspektren unter Verwendung des Analysemoduls beschreiben;
Gruppieren (1040) der Produktionen, die in jedem Spektrum der zwei oder mehr Produktionenspektren vorhanden sind, in mindestens zwei verschiedene Gruppen gemäß den mindestens zwei verschiedenen Mustern unter Verwendung des Analysemoduls; und
Kombinieren (1050) von Spitzen in den zwei oder mehr Produktionenspektren von Produktionen aus jeder Gruppe der mindestens zwei verschiedenen Gruppen unter Verwendung des Analysemoduls, wodurch ein kombiniertes Produktionenspektrum für jede Gruppe der mindestens zwei verschiedenen Gruppen erzeugt wird, das nur Spitzen von Produktionen aus jeder Gruppe enthält.

## Revendications

1. Système (100) pour séparer les ions produits à partir d'ions précurseurs convolutionnés dans les spectres d'ions produits collectés à partir d'une expérience de spectrométrie de masse à analyse dépendante de l'information (IDA), le système comprenant :
un processeur (104) qui est configuré pour :
recevoir deux ou plusieurs spectres d'ions produits (300) collectés à deux ou plusieurs moments (201, 202, 203) à travers un profil de pic chromatographique d'un ion précurseur d'un composé se séparant au fil du temps, dans lequel les deux ou plusieurs spectres d'ions produits sont produits en séparant le composé au fil du temps à partir d'un échantillon à l'aide d'un dispositif de séparation et sélection et fragmentation de l'ion précurseur aux deux ou plusieurs moments à travers le profil de pic chromatographique dans un procédé IDA utilisant un spectromètre de masse en tandem, dans lequel le spectromètre de masse en tandem est configuré pour effectuer un balayage complet d'analyse ionique avant de sélectionner et de fragmenter ledit ion précurseur aux deux ou plusieurs moments à travers le pic chromatographique,
comparer les intensités des ions produits présents dans chaque spectre des deux ou plusieurs spectres d'ions produits à travers les deux ou plusieurs spectres d'ions produits,
identifier au moins deux motifs différents (400, 500) qui décrivent le changement d'intensité des ions produits à travers les deux ou plusieurs spectres d'ions produits,
regrouper les ions produits présents dans chacun spectre des deux ou plusieurs spectres d'ions produits dans au moins deux groupes différents selon les au moins deux motifs différents, et
combiner des pics dans les deux ou plusieurs spectres d'ions produits d'ions produits de chaque groupe des au moins deux groupes différents, produisant un spectre d'ions produits combiné (960, 970) pour chaque groupe des au moins deux groupes différents qui comprend uniquement des pics d'ions produits à partir de chaque groupe.

2. Système selon la revendication 1, comprenant en outre ledit spectromètre de masse en tandem, et dans lequel le processeur est en outre configuré pour recevoir des informations du balayage complet d'analyse ionique et identifie au moins deux motifs différents sur la base des caractéristiques extraites des informations du balayage complet d'analyse ionique.

3. Système selon la revendication 2, dans lequel les caractéristiques comprennent des informations spécifiques sur les ions précurseurs.

4. Système selon la revendication 1, dans lequel le processeur est configuré pour identifier au moins deux motifs différents sur la base des caractéristiques des deux ou plusieurs spectres d'ions produits.

5. Système selon la revendication 4, dans lequel les caractéristiques comprennent des informations spécifiques sur les ions produits.

6. Système selon la revendication 1, dans lequel le processeur est configuré pour identifier au moins deux motifs différents sur la base des deux ou plusieurs spectres d'ions produits et sans aucune information spécifique sur les ions produits.

7. Système selon la revendication 1, dans lequel le processeur est configuré pour combiner les pics d'ions produits de chaque groupe en additionnant les pics d'ions produits.

8. Système selon la revendication 1, dans lequel le processeur est en outre configuré pour comparer le spectre d'ions produits combiné pour chaque groupe à une base de données de composés pour identifier le composé.

9. Système selon la revendication 1, dans lequel le composé comprend des protéines ou des peptides.

10. Système selon la revendication 1, comprenant en outre ledit spectromètre de masse en tandem qui est configuré pour espacer les deux ou plusieurs moments à travers le profil de pic chromatographique.

11. Système selon la revendication 10, dans lequel le spectromètre de masse en tandem est en outre configuré pour espacer les deux ou plusieurs moments à travers le profil de pic chromatographique en incluant une fenêtre d'exclusion qui a une largeur qui est inférieure à la largeur du profil de pic chromatographique.

12. Système selon la revendication 10, dans lequel le spectromètre de masse en tandem est en outre configuré pour espacer les deux ou plusieurs moments à travers le profil de pic chromatographique en forçant automatiquement la réacquisition d'un pourcentage d'ions précurseurs sélectionnés après un certain nombre de cycles et à nouveau après le double du nombre de cycles, dans lequel un cycle comprend un cycle complet d'un balayage complet d'analyse ionique suivi d'une pluralité de balayages de sélection et de fragmentation d'ions précurseurs.

13. Système selon la revendication 10, dans lequel le spectromètre de masse en tandem est en outre configuré pour espacer les deux ou plusieurs moments à travers le profil de pic chromatographique en détectant automatiquement deux ou plusieurs ions précurseurs dans une fenêtre d'isolement et en forçant une pluralité de balayages de sélection et de fragmentation d'ions précurseurs pour la fenêtre d'isolement après un certain nombre de cycles, dans lequel un cycle comprend un cycle complet d'un balayage complet d'analyse ionique suivi d'une pluralité de balayages de sélection et de fragmentation d'ions précurseurs.

14. Procédé (1000) pour séparer les ions produits des ions précurseurs convolutionnés dans des spectres d'ions produits collectés à partir d'une expérience de spectrométrie de masse à analyse dépendante de l'information (IDA), le procédé comprenant :
la réception (1010) de deux ou plusieurs spectres d'ions produits collectés à deux ou plusieurs moments sur un profil de pic chromatographique d'un ion précurseur d'un composé se séparant au fil du temps à l'aide d'un processeur, dans lequel les deux ou plusieurs spectres d'ions produits sont produits en séparant le composé au fil du temps d'un échantillon à l'aide d'un dispositif de séparation et en sélectionnant et en fragmentant le précurseur ion aux deux ou plusieurs moments à travers le profil de pic chromatographique dans un procédé IDA utilisant un spectromètre de masse en tandem, dans lequel le spectromètre de masse en tandem est configuré pour effectuer un balayage complet d'analyse ionique avant de sélectionner et de fragmenter ledit ion précurseur aux deux ou plusieurs moments à travers le pic chromatographique ;
la comparaison (1020) des intensités d'ions produits présents dans chaque spectre des deux ou plusieurs spectres d'ions produits à travers les deux ou plusieurs spectres d'ions produits en utilisant le processeur ;
l'identification (1030) d'au moins deux motifs différents qui décrivent le changement d'intensité des ions produits à travers les deux ou plusieurs produits en utilisant le processeur ;
le groupement (1040) des ions produits présents dans chaque spectre des deux ou plusieurs spectres d'ions produits en au moins deux groupes différents selon les au moins deux motifs différents en utilisant le processeur ; et
la combinaison (1050) de pics dans les deux ou plusieurs spectres d'ions produits des ions produits de chaque groupe des au moins deux groupes différents en utilisant le processeur, produisant un spectre d'ions produits combiné pour chaque groupe des au moins deux groupes différents qui comprend seulement des pics d'ions produits de chaque groupe.

15. Produit de programme informatique, comprenant un support de stockage non transitoire et tangible lisible par ordinateur dont le contenu comprend un programme avec des instructions à exécuter sur un processeur afin d'implémenter un procédé pour séparer les ions produits des ions précurseurs convolutionnés dans les spectres d'ions produits collectés à partir d'une expérience de spectrométrie de masse à analyse dépendante de l'information (IDA), le procédé comprenant :
la fourniture d'un système (1100), dans lequel le système comprend un ou plusieurs modules logiciels distincts, et dans lequel les modules logiciels distincts comprennent un module d'entrée (1110) et un module d'analyse (1120) ;
la réception (1010) d'au moins deux spectres d'ions produits collectés à deux ou plusieurs moments sur un profil de pic chromatographique d'un ion précurseur d'un composé se séparant au fil du temps à l'aide du module d'entrée, dans lequel les deux ou plusieurs spectres d'ions produits sont produits en séparant le composé au fil du temps à partir d'un échantillon utilisant un dispositif de séparation et sélection et fragmentation de l'ion précurseur aux deux ou plusieurs moments à travers le profil de pic chromatographique dans un procédé IDA utilisant un spectromètre de masse en tandem, dans lequel le spectromètre de masse en tandem est configuré pour effectuer un balayage complet d'analyse ionique avant de sélectionner et de fragmenter ledit ion précurseur aux deux ou plusieurs moments à travers le pic chromatographique ;
la comparaison (1020) des intensités d'ions produits présents dans chaque spectre des deux ou plusieurs spectres d'ions produits à travers les deux ou plusieurs spectres d'ions produits en utilisant le module d'analyse ;
l'identification (1030) d'au moins deux motifs différents qui décrivent le changement d'intensité des ions produits à travers les deux ou plusieurs spectres d'ions produits en utilisant le module d'analyse ;
le groupement (1040) des ions produits présents dans chaque spectre des deux ou plusieurs spectres d'ions produits en au moins deux groupes différents selon les au moins deux motifs différents en utilisant le module d'analyse ; et
la combinaison (1050) des pics dans les deux ou plusieurs spectres d'ions produits des ions produits de chaque groupe des au moins deux groupes différents en utilisant le module d'analyse, produisant un spectre d'ions produits combiné pour chaque groupe des au moins deux groupes différents qui comprend seulement les pics d'ions produits de chaque groupe.
